# FASCICULE DE BREVET EUROPEEN

(11) **EP 2 828 141 B1**
(45) Date de publication et mention de la délivrance du brevet: **05.04.2017**
(21) Numéro de dépôt: 13710456.8
(22) Date de dépôt: 14.02.2013
(51) Int. Cl.: B62D 21/09, B62D 25/04

(54) **RENFORT MODULAIRE POUR L'ANCRAGE D'UNE CEINTURE DE SECURITE SUR LE PIED CENTRAL D'UN VEHICULE**
MODULARE VERSTÄRKUNG ZUR VERANKERUNG EINES SICHERHEITSGURTS AN DER MITTELSÄULE EINES FAHRZEUGS
MODULAR REINFORCEMENT FOR ANCHORING A SAFETY BELT TO THE CENTRAL PILLAR OF A VEHICLE

(30) Priorité: 21.03.2012 FR 1252514
(43) Date de publication de la demande: 28.01.2015
(73) Titulaire: PSA Peugeot Citroën Automobiles S.A., 78140 Velizy Villacoublay (FR)
(72) Inventeur: LEFEVRE, Eric, F-91470 Limours (FR)
(86) Numéro de dépôt international: PCT/FR2013/050305
(87) Numéro de publication internationale: WO 2013/140054

(56) Documents cités:
- WO-A1-2011/128759
- JP-A- 11 192 970
- JP-A- 2006 273 145
- US-A1- 2008 143 144

## Description

L'invention a trait à un pilier de structure de véhicule. Plus particulièrement, l'invention a trait à l'ancrage d'une ceinture de sécurité sur un pilier de structure de véhicule, plus particulièrement à une pièce de renfort et/ou de fixation pour ledit ancrage. L'invention a également trait à un véhicule équipée d'au moins une telle pièce de renfort et/ou de fixation.

Afin de matérialiser une jonction entre le toit et le reste d'une structure ou caisse de véhicule, des piliers sont disposés de chaque côté du véhicule. Ils contribuent à la rigidité générale de la caisse et évitent un écrasement du toit lors de certains incidents. Ils participent donc à la sécurité du véhicule. Cette notion de sécurité est récurrente pour les piliers puisqu'ils peuvent en outre servir de support pour la fixation de ceintures de sécurité d'un véhicule. La ceinture peut être fixe, ou fixée sur une glissière afin de permettre son réglage en hauteur. Pour chacune de ces solutions, une pièce de fixation pour l'ancrage de ceinture de sécurité doit être développée pour ne pas relier la ceinture directement et uniquement à la tôle intérieure ou à la tôle extérieure formant le pilier.

Pour encore augmenter la sécurité que peut procurer un pilier, un renfort allongé peut y être incorporé. Ce renfort permet de le rigidifier, par exemple contre une collision latérale, et limite les intrusions dans l'habitacle du véhicule.

Un pilier peut être produit suivant de multiples configurations en fonction des réglages et de la sécurité que l'on en attend. Cette modularité impose de développer à la fois plusieurs tôles intérieures et extérieures formant le pilier, plusieurs renforts de pilier et plusieurs renforts de fixation pour l'ancrage de ceinture de sécurité. Cette pluralité de pièces à développer multiplie les coûts d'outillage, de fabrication et de gestion des références.

Le document US 2003/0116955 A1 décrit un support de ceinture de sécurité destiné à être monté sur un pilier B de véhicule. Le support présente une section en U qui délimite une cavité lorsqu'il est monté sur ledit pilier B, la cavité servant à loger des mécanismes de la ceinture de sécurité. Le support suit une courbure vers l'extérieur. Pour permettre un réglage en hauteur de la ceinture, le support montre une ouverture dont la hauteur est égale au double de la largeur de la ceinture de sécurité. La fixation s'effectue par l'introduction d'un moyen de fixation dans des orifices.

Le document WO 01/70557 A1 divulgue le préambule de la revendication 1 et présente une structure de pilier B de véhicule.

La structure comprend un élément porteur, un habillage et des parties fonctionnelles d'une ceinture de sécurité fixée sur l'élément. Les différents éléments sont fixés les uns aux autres par soudage.

Les modes et moyens de fixation présentés par ces documents permettent une modularité d'assemblage. Or ces modes de fixation sont onéreux, ils demandent du temps et de l'outillage spécifique. Chaque moyen de fixation occupe de la place et peut être visible, ce qui le rend inadapté pour une tôle de carrosserie extérieure. Les moyens de fixation sont généralement en saillie par rapport à leur surface d'implantation et peuvent interférer avec d'autres éléments. Ces modes de fixation nécessitent couramment de disposer d'une surface d'appui ferme pour supporter un effort de serrage dudit moyen. L'invention a pour objectif de résoudre au moins un des problèmes soulevés dans l'art antérieur. L'invention a pour objectif de simplifier l'assemblage d'un pilier comprenant une pièce de renfort dudit pilier et/ou une pièce de fixation pour l'ancrage de ceinture de sécurité sur le pilier du véhicule. L'invention a également pour objectif de réduire les coûts engendrés par la modularité d'un pilier recevant optionnellement une pièce de renfort de pilier et/ou différents modes d'implantation d'une ceinture de sécurité.

L'invention a pour objet une pièce de renfort et/ou de fixation pour l'ancrage d'une ceinture de sécurité sur un pilier de la structure d'un véhicule, la pièce comprenant un tôle emboutie avec un orifice destiné à être traversé par un moyen d'ancrage de ladite ceinture, et deux bords opposés de fixation à des feuillures de jonction de deux tôles formant le pilier, remarquable en ce qu'au moins un des deux bords opposés comprend des pattes de fixation destinées à être logées dans la feuillure correspondante et ménageant entre elles des espaces dans ladite feuillure aptes à contenir au moins une patte de fixation d'une autre pièce.

Suivant un autre mode avantageux de l'invention, l'orifice présente un moyen de fixation réversible tel un filetage.

Suivant un encore autre mode avantageux de l'invention, les pattes de fixation présentent une portion plane et un allongement, les pattes de fixation sont plus longues que leur largeur moyenne, la largeur moyenne étant supérieure à 6,00 mm, préférentiellement supérieure à 10,00 mm, afin de recevoir une soudure électrique par point.

Suivant un encore autre mode avantageux de l'invention, les pattes de fixation présentent une forme de trapèze avec un sommet arrondi.

Suivant un encore autre mode avantageux de l'invention, la pièce présente une section en « U », dont l'extrémité des branches comprennent, chacune, les pattes de fixation.

Suivant un encore autre mode avantageux de l'invention, la pièce présente une direction principale, les deux côtés opposés s'étendant généralement suivant cette direction principale.

Suivant un encore autre mode avantageux de l'invention, les pattes de fixation d'un des bords, préférentiellement des deux bords, s'étendent essentiellement suivant un même plan.

Suivant un encore autre mode avantageux de l'invention, les pattes d'un des bords, préférentiellement des deux bords, s'étendent suivant des directions principales essentiellement parallèles.

Suivant un encore autre mode avantageux de l'invention, la pièce est une pièce de renfort généralement allongée avec une partie supérieure évasée apte à s'étendre jusqu'à la jonction du pilier avec le toit.

L'invention a également pour objet un véhicule comprenant une structure avec un pilier formé par une tôle intérieure et une tôle extérieure qui délimitent un espace creux et qui sont jointives au niveau de feuillures, le pilier étant apte à coopérer avec un moyen d'ancrage de renvoi de ceinture de sécurité, le pilier comprenant une pièce de renfort et/ou de fixation pour l'ancrage, remarquable en ce que la pièce de renfort et/ou de fixation est conforme à l'invention.

Suivant un mode avantageux de l'invention, le pilier comprend deux pièces conformes à l'invention, l'une étant une pièce de renfort et l'autre étant une pièce de fixation, dont les pattes de fixation respectives s'intercalent les unes dans les autres à l'intérieur des feuillures.

Suivant un autre mode avantageux de l'invention, la tôle intérieure présente une ouverture, tel un perçage, destiné à être traversé par le moyen d'ancrage de la ceinture de sécurité, ou un ajour allongé destiné à être traversé par la ceinture de sécurité.

Suivant un encore autre mode avantageux de l'invention, la ou au moins une des pièces est logée entre les tôles intérieure et extérieure du pilier et présente une surface qui épouse au moins partiellement, préférentiellement majoritairement, la surface correspondante de l'une desdites tôles.

Suivant un encore autre mode avantageux de l'invention, les tôles intérieure et extérieure du pilier présentent un écartement variable le long de leurs feuillures avec des zones attenantes pour un contact direct et des zones élargies pour loger les pattes de fixation, les feuillures étant soudées par points de soudure à deux épaisseurs aux zones attenantes et par points de soudure à trois épaisseurs aux zones élargies.

Suivant un encore autre mode avantageux de l'invention, la pièce de renfort et la pièce de fixation sont superposées, la pièce de renfort étant plus longue que la pièce de fixation suivant la direction principale du pilier, les zones attenantes des tôles intérieure et extérieure du pilier étant disposées le long de la pièce de renfort, majoritairement en dehors de la pièce de fixation.

Les mesures de l'invention permettent de fixer simultanément deux mêmes pièces le long d'une même feuillure sans qu'elles ne se chevauchent. La présence des deux pièces simultanément ne contraint pas le pilier. L'invention permet d'optimiser une combinaison d'assemblage économe, à savoir la soudure par point, tout en respectant une contrainte liée à un nombre maximal d'épaisseur de tôles. Les pattes de fixations forment des peignes dont les espaces inter-dents permettent de recevoir d'autres dents ou pattes de fixations entremêlées afin de partager une feuillure en vue de s'y fixer sans augmenter l'épaisseur de l'empilement des bords de fixations, ni le nombre d'épaisseurs. L'invention permet d'offrir une modularité sans augmenter les coûts de développement ou d'assemblage. Différents éléments peuvent cohabiter. Ils peuvent en outre cohabiter selon différentes combinaisons sans imposer de modifier leur environnement.

D'autres caractéristiques et avantages de la présente invention seront mieux compris à l'aide de la description donnée à titre d'exemple et en référence aux dessins parmi lesquels :
- La figure 1 est une représentation de la caisse d'un véhicule comprenant une pièce de renfort et une pièce de fixation, conformément à l'invention ;
- La figure 2 schématise une tôle extérieure du pilier visible à la figure 1 ;
- La figure 3 illustre une pièce de renfort du pilier ;
- La figure 4 illustre une pièce de fixation pour l'ancrage de ceinture de sécurité ;
- La figure 5 illustre une première tôle, intérieure, du pilier ;
- La figure 6 illustre une deuxième tôle, intérieure, du pilier ;
- La figure 7 présente une première combinaison d'assemblage selon l'invention ;
- La figure 8 présente une deuxième combinaison d'assemblage selon l'invention ;
- La figure 9 présente une troisième combinaison d'assemblage selon l'invention ;
- La figure 10 illustre les combinaisons offertes par l'invention, les combinaisons étant représentées selon des coupes 10-10 des figures 7, 8 et 9.

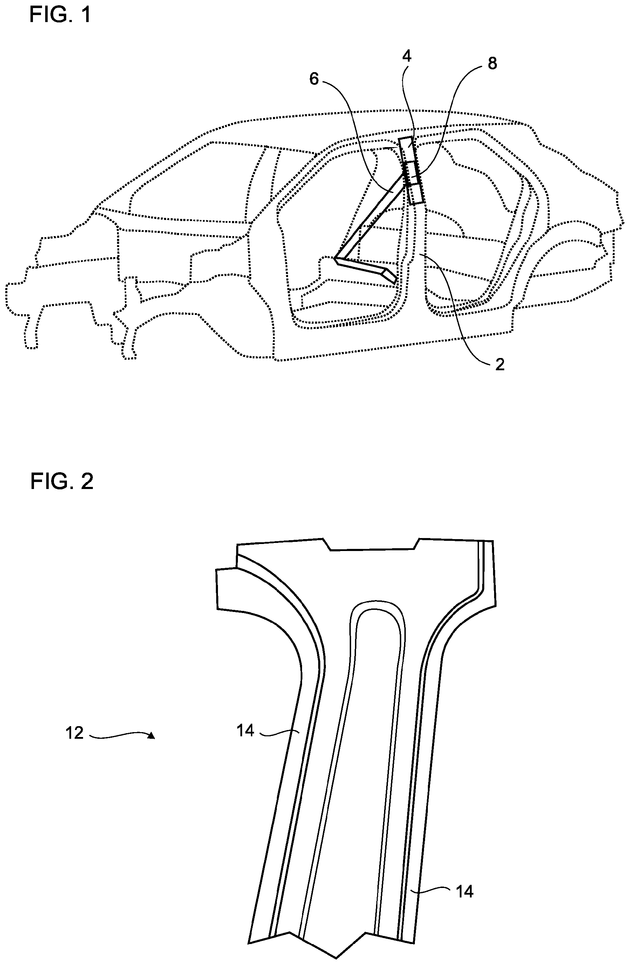

La figure 1 représente une caisse de véhicule. La caisse comprend au moins un pilier 2 permettant de relier le toit du véhicule aux parties inférieures de la caisse. Le pilier 2 présente un allongement principal qui correspond sensiblement à l'axe vertical du véhicule. Le pilier 2 est réalisé en tôle, par exemple en tôle d'acier. Il comprend une tôle extérieure et une tôle intérieure. Les références intérieure et extérieure sont considérées par rapport à l'habitacle du véhicule. Ces tôles sont essentiellement fines. Elles sont mises en forme par emboutissage afin de les bomber. Une fois réunies, les tôles forment un espace creux. Elles sont assemblées au niveau de feuillures, par exemple à l'aide de soudures électriques par points. Le pilier 2 peut être évasé à ses jonctions avec le toit, avec un longeron ou un autre élément de structure.

Le pilier 2 peut être rigidifié par une pièce de renfort 4 de pilier situé à l'intérieur des deux tôles. La pièce de renfort 4 de pilier permet de renforcer la tôle extérieure de la caisse du véhicule, par exemple contre une collision latérale ou un écrasement.

Sur le pilier peut être fixée une ceinture de sécurité 6 qui est représentée en configuration déployée, telle qu'elle permet de retenir un passager. Le moyen d'ancrage de la ceinture de sécurité 6, tel une vis, peut être fixé sur la tôle intérieure. En cas de sollicitation correspondant à une collision, le moyen d'ancrage concentre ses contraintes essentiellement en un point sur son support. Pour être conforme aux exigences en termes de sécurité, le pilier 2 peut être muni d'une pièce de fixation pour l'ancrage 8 ou pièce de support d'ancrage de ceinture de sécurité 6. La pièce de fixation pour l'ancrage 8 permet d'affermir la fixation de la ceinture de sécurité sur le pilier 2 en consolidant le support sur lequel est relié le moyen d'ancrage.

La pièce de renfort de pilier et la pièce de fixation pour l'ancrage peuvent être montées en partie supérieure du pilier, au niveau du toit, et/ou en partie inférieure, au niveau du longeron, par exemple au niveau d'une zone de fixation inférieure de ceinture de sécurité. Une même pièce peut s'étendre sur la majorité de la hauteur du pilier, préférentiellement toute la hauteur du pilier.

La figure 2 présente une portion de tôle extérieure 12 du pilier central de la carrosserie du véhicule. Cette tôle extérieure 12 est vue depuis l'extérieur du véhicule. Elle présente un allongement principal orienté suivant la direction verticale du véhicule. Elle comprend des zones de fixation 14 destinées à former des feuillures qui s'étendent essentiellement sur la hauteur de la tôle extérieure 12. Les zones de fixation 14 sont aptes à recevoir des soudures électriques par points sur une autre tôle. Les zones de fixation 14 forment essentiellement des bandes.

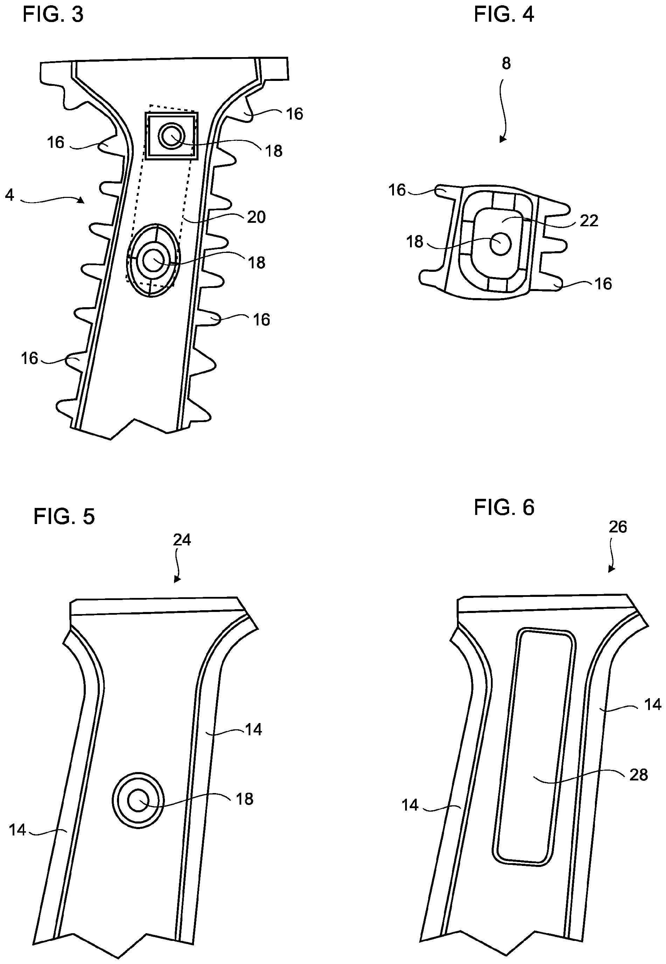

La figure 3 illustre la pièce de renfort 4 de pilier. La pièce de renfort 4 de pilier peut être réalisée en tôle, par exemple en acier ou en aluminium. La pièce de renfort 4 peut être emboutie. Sa surface extérieure longe au moins partiellement la surface intérieure de la tôle extérieure. En leurs parties centrales, la tôle extérieure 12 et la pièce de renfort 4 sont à distance l'une de l'autre. La pièce de renfort 4 peut être d'épaisseur supérieure à l'épaisseur des tôles intérieure et extérieure, préférentiellement deux fois supérieure, encore plus préférentiellement trois fois supérieure.

La pièce de renfort 4 présente une direction principale et deux côtés opposés. Les côtés opposés peuvent s'étendre selon la direction principale. Ils peuvent s'étendre en ligne droite et/ou former des courbes. Les côtés opposés comprennent des zones de fixation. Les zones de fixation présentent des pattes de fixation 16. Les pattes de fixation 16 s'étendent transversalement à la direction principale. Suivant la direction transversale, les pattes de fixation 16 présentent une longueur supérieure à leur largeur moyenne.

La pièce de renfort 4 présente un orifice 18 pouvant servir à fixer en un point fixe un moyen d'ancrage de la ceinture de sécurité. Préférentiellement, la pièce de renfort 4 présente au moins deux orifices 18 pouvant être utilisés pour le montage d'un rail de réglage 20 en hauteur de la ceinture de sécurité. La pièce de renfort 4 peut être généralement symétrique par rapport à un plan de symétrie vertical. Au moins un orifice 18, préférentiellement au moins deux sont disposés au niveau du plan de symétrie.

La figure 4 schématise la pièce de fixation pour l'ancrage 8. La pièce de fixation 8 peut être réalisée en tôle, par exemple en acier ou en aluminium et présenter un embouti 22. La surface intérieure de l'embouti 22 épouse partiellement la surface extérieure de la tôle intérieure de manière à pouvoir y être plaqué. La pièce de fixation 8 peut être d'épaisseur supérieure à l'épaisseur des tôles intérieure et extérieure, préférentiellement deux fois supérieure, encore plus préférentiellement quatre fois supérieure. La pièce de fixation 8 permet grâce à son étendue de réduire la concentration de contraintes au niveau du moyen d'ancrage de la ceinture de sécurité. Il permet de plus, grâce à son épaisseur, de rigidifier localement la tôle intérieure.

La pièce de fixation 8 présente deux côtés opposés. Les côtés opposés peuvent s'étendre selon une direction principale de la pièce de fixation 8. Ils peuvent s'étendre en ligne droite et/ou former des courbes. Les côtés opposés comprennent des zones de fixation. Les zones de fixation présentent des pattes de fixation 16. Les pattes de fixation 16 s'étendent transversalement à la direction principale. Suivant la direction transversale, les pattes de fixation 16 présentent une longueur supérieure à leur largeur moyenne.

La pièce de fixation 8 présente un orifice 18 pouvant servir à fixer en un point fixe un moyen d'ancrage de la ceinture de sécurité. Elle peut être généralement symétrique par rapport à un plan de symétrie vertical. L'orifice 18, est préférentiellement disposé au niveau du plan de symétrie.

La largeur des pattes de fixation 16 peut être variable et se réduire en direction de l'extrémité. Les pattes de fixation 16 sont essentiellement similaires. La largeur des pattes de fixation 16 permet d'y réaliser une soudure électrique par point dont la taille minimale dépend de la nuance et de l'épaisseur de la tôle. Les pattes de fixation 16 peuvent présenter différentes largeurs. Leurs longueurs sont préférentiellement constantes et inférieure ou égales à la largeur des zones de fixation de la tôle extérieure 12. Préférentiellement, la largeur est supérieure à 4,00 mm, plus préférentiellement supérieure à 8,00 mm, encore plus préférentiellement supérieur à 12,00 mm.

Les pattes de fixation 16 sont écartées les unes des autres selon un entre-axe généralement constant. La distance d'écartement est supérieure ou égale à la largeur moyenne des pattes de fixation 16. Les écarts entre les pattes de fixation 16 sont sensiblement constants. La largeur moyenne des pattes de fixation 16 qui est considérée est la moyenne des largeurs moyennes des pattes de fixation 16.

La distance moyenne d'écart entre deux pattes de fixation 16 consécutive est supérieure à la largeur moyenne des pattes de fixation 16, préférentiellement deux fois supérieure, encore plus préférentiellement trois fois supérieure. L'écartement des pattes de fixation 16 permet, suivant un même plan, de placer entre elles au moins une autre patte de fixation 16, préférentiellement au moins deux. L'écart entre deux pattes de fixation 16 permet de préférence de réaliser au moins une soudure électrique par point.

La figure 5 représente une première tôle intérieure 24 de pilier, par exemple une doublure de pied central compatible avec une première et une deuxième combinaison d'assemblage selon l'invention. Cette première tôle intérieure 24 est vue depuis l'intérieur du véhicule. Elle présente un allongement principal orientée suivant la direction verticale du véhicule. Elle comprend des zones de fixations 14 s'étendant essentiellement sur la hauteur de la tôle extérieure 12. Les zones de fixation des tôles intérieure et extérieure sont conjuguées. Réunies, elles forment des feuillures d'épaisseur sensiblement constante et libre de saillie. Les feuillures peuvent être utilisées par exemple pour y chausser un joint. La première tôle intérieure 24 comprend un orifice 18 destiné à coïncider avec un des orifices de la pièce de renfort de pilier et/ou avec la pièce de fixation pour l'ancrage.

La figure 6 représente une deuxième tôle intérieure de pilier 26, par exemple une doublure de pied central compatible avec une troisième combinaison d'assemblage de l'invention. Cette deuxième tôle intérieure 26 est vue depuis l'intérieur du véhicule. Elle présente un allongement principal orientée suivant la direction verticale du véhicule. Elle comprend des zones de fixation 14 s'étendant essentiellement sur la hauteur de la tôle extérieure 12. Les zones de fixation des tôles intérieure et extérieure sont conjuguées. Réunies, elles forment des feuillures d'épaisseur sensiblement constante et libre de saillie. Les feuillures peuvent être utilisées par exemple pour y chausser un joint. Cette deuxième tôle intérieure 26 comprend un ajour 28 destiné à coïncider avec le rail de réglage de la ceinture de sécurité qui est destiné à être fixé sur la pièce de renfort. L'ajour 28 présente un allongement orienté suivant la direction principale de la tôle intérieure.

La première tôle intérieure 24 et la deuxième tôle intérieure 26 présentent une même forme générale. Elles peuvent être réalisée à partir de mêmes opérations de découpe et d'emboutissage, ce qui permet de simplifier leur conception, leur gestion et de réduire leur coûts de production grâce à une économie d'échelle. Leur distinction réside dans la réalisation d'un orifice ou d'un ajour. On aura bien compris que leur similitude permet de réaliser des économies tout en proposant différentes formes et fonctions.

Suivant un mode avantageux, la tôle extérieure 12, les pièces (4, 8) et les tôles intérieures (24, 26) sont réalisées en des nuances d'acier sensiblement similaires, préférentiellement compatibles pour que soient réalisés entre elles des soudures électriques par point.

Ces éléments présentent des formes compatibles permettant de réaliser différents empilement ou assemblages jointifs au niveau des feuillures. Ils présentent entre autre des mêmes largeurs au niveau des feuillures.

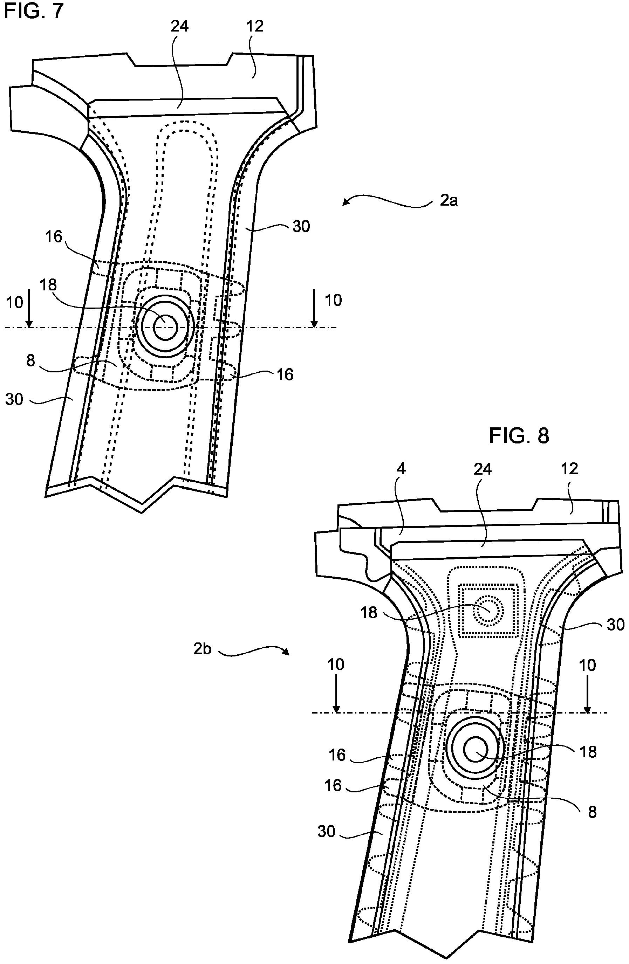

La figure 7 illustre une première combinaison d'assemblage de pilier 2a selon l'invention. Elle réunit depuis l'extérieur vers l'intérieur la tôle extérieure 12, la pièce de fixation pour l'ancrage 8 et la première tôle intérieure 24. Ces éléments sont superposés et jointifs au niveau des zones de fixation. Les tôles intérieure et extérieure (12, 24) accolent leurs zones de fixation pour former des feuillures 30. A l'intérieur de ces feuillures sont logées les pattes de fixation 16 de la pièce de fixation 8. Les orifices de la pièce de fixation 8 et de la première tôle intérieure 24 coïncident de manière à permettre l'insertion et la fixation du moyen d'ancrage de la ceinture de sécurité.

La figure 8 illustre une deuxième combinaison d'assemblage de pilier 2b selon l'invention. Elle réunit depuis l'extérieur vers l'intérieur la tôle extérieure 12, la pièce de renfort de pilier 4, la pièce de fixation pour l'ancrage 8 et la première tôle intérieure 24. Ces éléments sont superposés et jointifs au niveau des zones de fixation. Les tôles intérieure et extérieure (12, 24) accolent leurs zones de fixation pour former des feuillures 30. A l'intérieur de ces feuillures sont logées de manière décalée les pattes de fixation 16 de la pièce de renfort 4 et de la pièce de fixation 8.

Les orifices 18 de la pièce de fixation 8 et de la première tôle intérieure 24 coïncident de manière à permettre l'insertion et la fixation du moyen d'ancrage de la ceinture de sécurité. L'orifice 18 de la pièce de renfort 4 peut également coïncider de sorte à pouvoir offrir davantage de solutions d'ancrage pour plus de modularité et plus de rigidité.

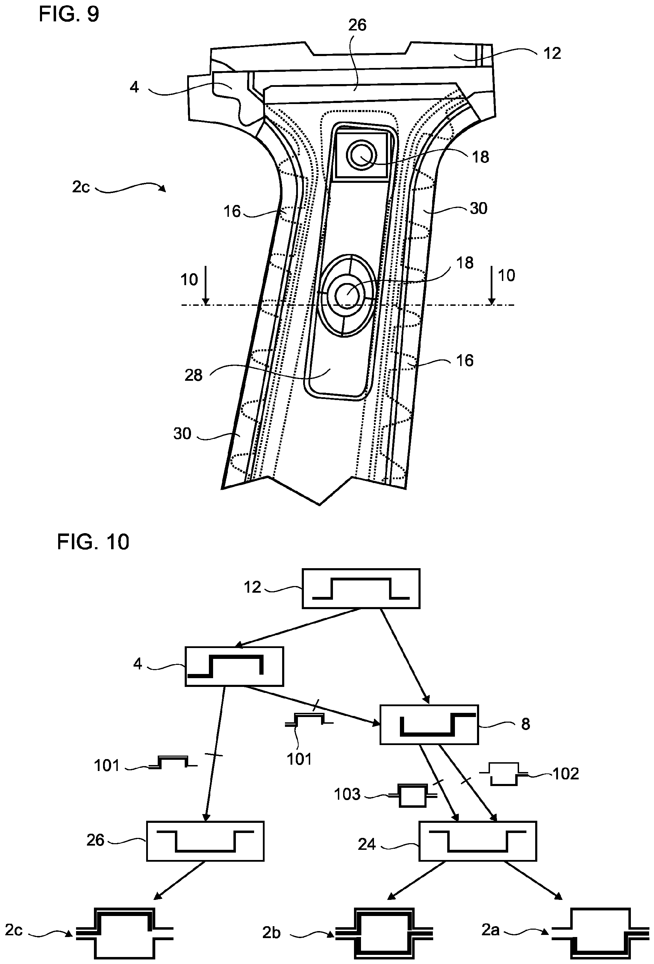

La figure 9 illustre une troisième combinaison d'assemblage de pilier 2c selon l'invention. Elle réunit depuis l'extérieur vers l'intérieur la tôle extérieure 12, la pièce de renfort 4 et la deuxième tôle intérieure 26. Ces éléments sont superposés et jointifs au niveau des zones de fixation. Les tôles intérieure et extérieures (12, 26) accolent leurs zones de fixation pour former des feuillures 30. A l'intérieur de ces feuillures sont logées les pattes de fixation 16 de la pièce de renfort 4.

On souligne que les pattes de fixation 16 des pièces présentent des écarts compatibles permettant de les intercaler les unes entre les autres. Elles peuvent s'interpénétrer et occuper un même plan. Entre les pattes de fixation 16 d'une même pièce sont ménagés des espaces qui sont occupés par les pattes de fixation 16 de l'autre pièce. Les pattes de fixation 16 forment une alternance.

Les pattes de fixation 16 des pièces (4, 8) présentent avantageusement une même épaisseur. Pour qu'elles puissent être disposées sur un même plan, les pièces présentent un vide de matière entre les pattes de fixation 16 sur une hauteur au moins supérieur à la moitié de l'épaisseur de pattes de fixation 16, préférentiellement sur une hauteur supérieure à l'épaisseur des pattes de fixation 16.

Les éléments (4, 8, 12, 24, 26) sont assemblés à l'aide de soudures électriques par point trois épaisseurs au niveau des pattes de fixation 16, et des deux épaisseurs entre les pattes de fixation 16. Dans la feuillure 30, les zones de fixation des tôles (12, 24, 26) peuvent présenter des écartements variables afin de s'ajuster aux zones dédiées pour un empilement de deux ou trois épaisseurs. Les zones de fixation des tôles forment des ponts qui enjambent les pattes de fixation.

La figure 10 représente schématiquement les différentes combinaisons d'assemblage possibles en réunissant les différents éléments. Ces combinaisons sont représentées selon des coupes suivant les axes 10-10 tracés sur les figures 7, 8, et 9. On précise que les axes 10-10 coupent, lorsqu'elles sont présentes, une patte de fixation 16 de gauche de la pièce de renfort de pilier 4 et une patte de fixation 16 de droite de la pièce de fixation 8.

L'invention s'appuie sur la même tôle extérieure 12 contre laquelle peuvent indifféremment et directement être rapporté soit la pièce de renfort de pilier 4 de manière à former le premier assemblage intermédiaire 101, soit la pièce de fixation 8 de manière à former le deuxième assemblage intermédiaire 102.

A partir du deuxième assemblage intermédiaire 102 peut être réalisé la première combinaison d'assemblage de pilier 2a en ajoutant la première tôle intérieure 24.

A partir du premier assemblage intermédiaire 101 peuvent être indifféremment et directement rapportés la deuxième tôle intérieure 26, ce qui permet d'aboutir à la troisième combinaison d'assemblage de pilier 2c, ou la pièce de fixation pour l'ancrage 8 de manière à former le troisième assemblage intermédiaire 103. Ce dernier permet de réaliser la deuxième combinaison d'assemblage de pilier 2b en y ajoutant ensuite la première tôle intérieure 24.

La première combinaison d'assemblage de pilier 2a constitue une solution économe, avec un ancrage fixe de ceinture. La deuxième combinaison d'assemblage de pilier 2b constitue une solution à la fois économe avec un ancrage fixe de ceinture, et sécurisante grâce à la présence de la pièce de renfort de pilier 4. La troisième combinaison d'assemblage de pilier 2c constitue une solution offrant une sécurité et une possibilité de réglage.

Toutes ces solutions sont offertes avec un nombre réduit d'éléments. En particulier, la pièce de renfort de pilier 4 et la pièce de fixation 8 sont compatibles, elles s'adaptent à la présence de l'autre sans nécessité de modifier l'environnement formé par les tôles intérieure et extérieure. De plus, les tôles intérieures (24, 26) présentent des différences minimes qui influent peu sur leurs coûts de revient. Grâce à ces aspects, l'invention permet de réaliser des économies sur un pied central tout en offrant une modularité sur la sécurité et l'équipement disponible.

## Revendications

1. Véhicule comprenant une structure avec un pilier (2) formé par une tôle intérieure (24, 26) et une tôle extérieure (12) qui délimitent un espace creux et qui sont jointives au niveau de feuillures (30), le pilier étant apte à coopérer avec un moyen d'ancrage de renvoi de ceinture de sécurité, le pilier (2) comprenant une pièce (4, 8) de renfort et/ou de fixation pour l'ancrage, la pièce (4, 8) comprenant un tôle emboutie avec un orifice (18) destiné à être traversé par le moyen d'ancrage de ladite ceinture, et deux bords opposés de fixation à des feuillures (30) de jonction des tôles intérieure (24, 26) et extérieure (12) formant le pilier (2), au moins un des deux bords opposés de ladite pièce (4, 8) comprenant des pattes de fixation (16) destinées à être logées dans la feuillure (30) correspondante et ménageant entre elles des espaces dans ladite feuillure (30) aptes à contenir au moins une patte de fixation (16) d'une autre pièce, **caractérisé en ce que** les tôles intérieure (24, 26) et extérieure (12) du pilier (2) présentent un écartement variable le long de leurs feuillures (30) avec des zones attenantes pour un contact direct et des zones élargies pour loger les pattes de fixation (16), les feuillures (30) étant soudées par points de soudure à deux épaisseurs aux zones attenantes et par points de soudure à trois épaisseurs aux zones élargies.

2. Véhicule suivant la revendication 1 **caractérisé en ce que** les pattes de fixation (16) d'un des bords, préférentiellement des deux bords, s'étendent essentiellement suivant un même plan.

3. Véhicule selon l'une des revendications 1 et 2, **caractérisée en ce que** les pattes (16) d'un des bords, préférentiellement des deux bords, s'étendent suivant des directions principales essentiellement parallèles.

4. Véhicule selon l'une des revendications 1 à 3, **caractérisée en ce qu'**elle est une pièce de renfort (4) généralement allongée avec une partie supérieure évasée apte à s'étendre jusqu'à la jonction du pilier (2) avec le toit.

5. Véhicule selon l'une des revendications 1 à 4, **caractérisé en ce que** le pilier (2) comprend deux pièces (4, 8), l'une étant une pièce de renfort (4) et l'autre étant une pièce de fixation (8), dont les pattes de fixation (16) respectives s'intercalent les unes dans les autres à l'intérieur des feuillures (30).

6. Véhicule selon l'une des revendications 1 à 5, **caractérisé en ce que** la tôle intérieure (24, 26) présente une ouverture, tel un orifice (18), destinée à être traversé par le moyen d'ancrage de la ceinture de sécurité (6), ou un ajour (28) allongé destiné à être traversé par la ceinture de sécurité.

7. Véhicule selon l'une des revendications 1 à 6, **caractérisé en ce que** la ou au moins une des pièces (4, 8) est logée entre les tôles intérieure (24, 26) et extérieure (12) du pilier et présente une surface qui épouse au moins partiellement, préférentiellement majoritairement, la surface correspondante de l'une desdites tôles (12, 24, 26).

8. Véhicule selon l'une des revendications de 5 à 7, **caractérisé en ce que** la pièce de renfort (4) et la pièce de fixation (8) sont superposées, la pièce de renfort (4) étant plus longue que la pièce de fixation (8) suivant la direction principale du pilier (2), les zones attenantes des tôles intérieure (24, 26) et extérieure (12) du pilier (2) étant disposées le long de la pièce de renfort (4), majoritairement en dehors de la pièce de fixation (8).

## Patentansprüche

1. Fahrzeug, eine Struktur mit einer Säule (2) umfassend, die durch ein Innenblech (24, 26) und ein Außenblech (12) gebildet wird, die einen Hohlraum eingrenzen und die im Bereich von Falzen (30) aneinanderstoßen, wobei die Säule imstande ist, mit einem Verankerungsmittel eines Umlenkbeschlags eines Sicherheitsgurts zusammenzuwirken, wobei die Säule (2) ein Verstärkungsteil (4, 8) und/ oder Befestigungsteil für die Verankerung umfasst, wobei das Teil (4, 8) ein tiefgezogenes Blech mit einer Öffnung (18) umfasst, die dazu bestimmt ist, von dem Verankerungsmittel des besagten Gurts durchquert zu werden, sowie zwei gegenüber liegende Ränder zum Befestigen an den Falzen (30) zum Verbinden des Innen- (24, 26) und Außenblechs (12), welche die Säule (2) bilden, wobei zumindest einer der beiden gegenüber liegenden Ränder des besagten Teils (4, 8) Befestigungslaschen (16) umfasst, die dazu bestimmt sind, im entsprechenden Falz (30) untergebracht zu werden, und die zwischen sich Räume im besagten Falz (30) bilden, die imstande sind, zumindest eine Befestigungslasche (16) eines weiteren Teils zu enthalten, **dadurch gekennzeichnet, dass** das Innen- (24, 26) und Außenblech (12) der Säule (2) einen variablen Abstand entlang ihrer Falze (30) mit den angrenzenden Bereichen für einen direkten Kontakt, sowie erweiterte Bereiche zum Unterbringen der Befestigungslaschen (16) aufweisen, wobei die Falze (30) durch Schweißpunkte für zwei Schichtdicken an die angrenzenden Bereiche, und durch Schweißpunkte für drei Schichtdicken an die erweiterten Bereiche angeschweißt sind.

2. Fahrzeug nach Anspruch 1, **dadurch gekennzeichnet, dass** sich die Befestigungslaschen (16) eines der Ränder, vorzugsweise beider Ränder, im Wesentlichen über eine selbe Ebene erstrecken.

3. Fahrzeug nach einem der Ansprüche 1 und 2, **dadurch gekennzeichnet, dass** sich die Laschen (16) eines der Ränder, vorzugsweise beider Rändern, in im Wesentlichen parallele Hauptrichtungen erstrecken.

4. Fahrzeug nach einem der Ansprüche 1 bis 3, **dadurch gekennzeichnet, dass** das Teil (4) ein im Allgemeinen längliches Verstärkungsteil (4) mit einem ausgestellten oberen Abschnitt ist, das imstande ist, sich bis zu einer Verbindung der Säule (2) mit dem Dach zu erstrecken.

5. Fahrzeug nach einem der Ansprüche 1 bis 4, **dadurch gekennzeichnet, dass** die Säule (2) zwei Teile (4, 8) umfasst, von denen das eine ein Verstärkungsteil (4) und das andere ein Befestigungsteil (8) ist, deren jeweilige Befestigungslaschen (16) sich im Inneren der Falze (30) ineinander einfügen.

6. Fahrzeug nach einem der Ansprüche 1 bis 5, **dadurch gekennzeichnet, dass** das Innenblech (24, 26) eine Öffnung in der Art eines Loches (18) aufweist, die dazu bestimmt ist, vom Verankerungsmittel für den Sicherheitsgurt (6) durchquert zu werden, oder eine längliche durchbrochene Stelle (28), die dazu bestimmt ist, vom Sicherheitsgurt durchquert zu werden.

7. Fahrzeug nach einem der Ansprüche 1 bis 6, **dadurch gekennzeichnet, dass** das oder zumindest eines der Teile (4, 8) zwischen dem Innen- (24, 26) und Außenblech (12) der Säule untergebracht ist, und eine Oberfläche aufweist, die sich zumindest teilweise, vorzugsweise mehrheitlich, an die entsprechende Oberfläche des einen der besagten Bleche (12, 24, 26) anlegt.

8. Fahrzeug nach einem der Ansprüche 5 bis 7, **dadurch gekennzeichnet, dass** das Verstärkungsteil (4) und das Befestigungsteil (8) überlagert sind, wobei das Verstärkungsteil (4) in Hauptrichtung der Säule (2) länger ist, als das Befestigungsteil (8), wobei die angrenzenden Bereiche des Innen- (24, 26) und Außenblechs (12) der Säule (2) entlang des Verstärkungsteils (4), mehrheitlich außerhalb des Befestigungsteils (8) angeordnet sind.

## Claims

1. Vehicle comprising a structure with a pillar (2) formed by an interior metal sheet (24, 26) and an exterior metal sheet (12) that delimit a hollow space and are contiguous at rebates (30), the pillar being able to cooperate with a means of anchoring a safety-belt mechanism, the pillar (2) comprising a reinforcement and/or fixing piece (4, 8) for the anchoring, the piece (4, 8) comprising a pressed metal sheet with an orifice (18) intended to have the means of anchoring of said belt pass through it, and two opposite edges for fixing to rebates (30) joining the interior (24,26) and exterior (12) metal sheets forming the pillar (2), at least one of the two opposite edges of said piece (4, 8) comprising fixing lugs (16) intended to be housed in the corresponding rebate (30) and forming spaces between them in said rebate (30) able to contain at least one lug (16) for fixing another piece, **characterised in that** the interior (24, 26) and exterior (12) metal sheets of the pillar (2) have a variable separation along their rebates (30) with adjacent zones for direct contact and widened zones for housing the fixing lugs (16), the rebates (30) being spot welded at two thicknesses to the adjacent zones and by spot welding with three thicknesses to the widened zones.

2. Vehicle according to claim 1, **characterised in that** the lugs (16) for fixing one of the edges, preferentially both edges, extend essentially in the same plane.

3. Vehicle according to one of claims 1 or 2, **characterised in that** the lugs (16) of one of the edges, preferentially of both edges, extend in essentially parallel main directions.

4. Vehicle according to one of claims 1 to 3, **characterised in that** the piece (4) is a generally elongate reinforcing piece (4) with a splayed top part able to extend as far as the junction of the pillar (2) with the roof.

5. Vehicle according to one of claims 1 to 4, **characterised in that** the pillar (2) comprises two pieces (4, 8), one being a reinforcing piece (4) and the other being a fixing piece (8), the respective fixing lugs (16) of which fit one in the other inside the rebates (30).

6. Vehicle according to one of claims 1 to 5, **characterised in that** the interior metal sheet (24, 26) has an opening, such as an orifice (18), intended to have the means for anchoring the safety belt (6) pass through it, or an elongate opening (28) intended to have the safety belt pass through it.

7. Vehicle according to one of claims 1 to 6, **characterised in that** the or at least one of the pieces (4, 8) is housed between the interior (24, 26) and exterior (12) metal sheets of the pillar and has a surface that at least partially, and preferably mainly, matches the corresponding surface of one of said metal sheets (12, 24, 26).

8. Vehicle according to one of claims 5 to 7, **characterised in that** the reinforcing piece (4) and the fixing piece (8) are placed one on the other, the reinforcing piece (4) being longer than the fixing piece (8) in the principal direction of the pillar (2), the adjacent zones of the interior (24, 26) and exterior (12) metal sheets of the pillar (2) being disposed along the reinforcing piece (4), mainly outside the fixing piece (8).
